# EUROPEAN PATENT SPECIFICATION

(11) **EP 4 331 463 B1**
(45) Date of publication and mention of the grant of the patent: **02.07.2025**
(21) Application number: 22909685.4
(22) Date of filing: 30.11.2022
(51) Int. Cl.: A47L 11/40, A47L 11/282, A47L 9/04

(54) **FLOOR BRUSH AND CLEANING APPARATUS**
BODENBÜRSTE UND REINIGUNGSVORRICHTUNG
BROSSE DE SOL ET APPAREIL DE NETTOYAGE

(30) Priority: 21.12.2021 CN 202111576222
(43) Date of publication of application: 06.03.2024
(73) Proprietor: Jiangsu Midea Cleaning Appliances Co., Ltd., Suzhou, Jiangsu 215100 (CN); Midea Group Co., Ltd., Foshan, Guangdong 528311 (CN)
(72) Inventor: WANG, Gang, Suzhou, Jiangsu 215000 (CN); CHANG, Fangyuan, Suzhou, Jiangsu 215000 (CN); LIN, Xiang, Suzhou, Jiangsu 215000 (CN); DAI, Jun, Suzhou, Jiangsu 215000 (CN); CHENG, Fuping, Suzhou, Jiangsu 215000 (CN)
(74) Representative: RGTH
(86) International application number: PCT/CN2022/135299
(87) International publication number: WO 2023/116370

(56) References cited:
- CN-A- 108 371 522
- CN-A- 113 520 220
- CN-U- 209 661 517
- CN-U- 210 204 602
- CN-U- 210 277 055
- CN-U- 211 609 594
- CN-U- 213 787 168
- CN-U- 215 191 322
- CN-U- 217 090 598
- JP-U- 3 231 715

## Description

### FIELD

The present invention relates to the field of cleaning appliances, and more particularly, to a floor brush and a cleaning apparatus.

### BACKGROUND

At present, a cleaning machine is gradually widely used, which greatly facilitates household deep cleaning work and reduces intensity of people's household chores. However, after a floor brush of the cleaning machine works, a rolling brush of the cleaning machine is usually dirty and needs to be detached separately for cleaning. Although some cleaning machines can self-clean, these cleaning machines have an incomplete cleaning effect. Moreover, dirt occurs at a clean water outlet, so the rolling brush still needs to be disassembled to clean the floor brush.

When a floor scrubber cleans a corner of wall, due to limitation of a structure of the floor brush, flannelette on the rolling brush may not be in contact with wall edges and corners. Therefore, a phenomenon in which a space at a distance of the wall edges cannot be scrubbed always occurs. It is particularly important to improve a cleaning effect along the wall edges.
CN 209 661 517 U discloses a multifunctional dust collector floor brush structure. The floor brush comprises a floor brush body and a rolling brush assembly. The rolling brush assembly comprises a rolling brush and a rolling brush cover installed on the rolling brush. The rolling brush cover is a cover body with an arc-shaped cross section; the ground brush body is matched with the rolling brush in shape and covers the rolling brush, a ground brush body connecting cover is connected to the cleaning end of the ground brush body, a rolling brush cover connecting component and a rolling brush connecting component are arranged on the ground brush body connecting cover, the rolling brush cover connecting component is detachably connected with the rolling brush cover, and the rolling brush connecting component is detachably connected with the rolling brush. The utility model further provides a dust collector.
CN 210 204 602 U discloses a floor brush and cleaning equipment. The floor brush comprises a main body, at least two rolling brush cavities, each rolling brush cavity comprises a cavity body and a rolling brush, the rolling brush is rotatably arranged in the cavity body, and a suction nozzle is arranged on the cavity body; and the main body is selectively and detachably connected with one of the two rolling brush cavities.

### SUMMARY

A main object of the present invention is to provide a floor brush and a cleaning apparatus, to solve the technical problems in the related art that the cleaning apparatus has a cleaning blind area and is poor in cleaning effect.

In order to achieve the above object, the present invention provides a floor brush according to independent claim 1. Further preferred embodiments are defined by the dependent claims.

The present invention
further provides a cleaning apparatus, including the floor brush described above.

In addition, the above floor brush of the present invention may further have the following additional technical features.

According to an embodiment of the present invention, the rolling brush is provided with a rolling brush shaft coaxially disposed with the sleeve portion. The rolling brush shaft passes through the sleeve portion to be rotatably connected to the collar portion.

According to an embodiment of the present invention, the floor brush further includes a limiting support member. The rolling brush shaft is connected to the collar portion through the limiting support member.

According to an embodiment of the present invention, the limiting support member is a bearing. The bearing has an inner ring sleeved on the rolling brush shaft and an outer ring connected to the collar portion; or the limiting support member is a shaft sleeve assembly. The shaft sleeve assembly is connected to the collar portion and sleeved on the rolling brush shaft.

According to the present invention, the integrated structure is detachably connected to the body, and the cover plate is detachably connected to the rolling brush.

According to the present invention, the body has a sliding rail provided thereon, and the cover plate has a sliding member provided thereon, the sliding member is slidably inserted to the sliding rail.

According to an embodiment of the present invention, the floor brush further includes a locking mechanism configured to lock or unlock sliding between the sliding rail and the sliding member.

According to an embodiment of the present invention, the locking mechanism has a locking groove/locking portion formed on the body and a locking portion/locking groove formed on the cover plate. The locking portion is engageable into or disengageable from the locking groove.

According to an embodiment of the present invention, the locking mechanism includes a snapping groove/snap formed on the body and a snap/ snapping groove formed on the cover plate.

Compared with the related art, the present invention has the following beneficial effects.
1. The collar portion is provided on the one end surface of the cover plate, and the one end surface of the rolling brush is recessed inwards to form the sleeve portion sleeved outside the collar portion. In this way, a structure on the cover plate for positioning the rolling brush is retracted in the rolling brush, which can save an external space of the rolling brush occupied by the structure on the cover plate for positioning the rolling brush. Further, a space at an end portion of the rolling brush is vacated, enabling the end portion of the rolling brush to extend to an exterior of the cleaning apparatus to realize cleaning of an original blind area.
2. The cover plate is connected to the rolling brush to form the integrated structure, and the integrated structure is detachably connected to the body. In this way, the cover plate and the rolling brush may be disassembled simultaneously, and the disassembly steps are reduced.
3. The cover plate is detachably connected to the rolling brush, which can clean the rolling brush solely and facilitate cleaning of the rolling brush.

### BRIEF DESCRIPTION OF THE DRAWINGS

In order to clearly explain technical solutions according to the embodiments of the present invention or in the related art, drawings used in the description of the embodiments or the related art are briefly described below. Obviously, the drawings described below are merely some embodiments of the present invention. Based on these drawings, other drawings can be obtained by those skilled in the art without creative effort.
FIG. 1 is a perspective view of a floor brush according to an embodiment of the present invention.
FIG. 2 is a schematic structural diagram of an integrated structure and a body after disassembly according to an embodiment of the present invention.
FIG. 3 is a vertical view of a floor brush according to an embodiment of the present invention.
FIG. 4 is a D-D cross-sectional view of FIG. 3.
FIG. 5 is a flip view of an integrated structure according to an embodiment of the present invention.
FIG. 6 is a schematic structural diagram of a cover plate according to an embodiment of the present invention.
FIG. 7 is a schematic structural diagram of a rolling brush according to an embodiment of the present invention.

### Description of Reference Numerals:

floor brush 100, body 10, locking groove 101, cover plate 11, collar portion 110, sliding member 111, locking portion 112, rotary shaft mounting base 110a, reinforcing rib 110b, rolling brush 12, sleeve portion 120, rolling brush shaft 121, limiting support member 13.

### DETAILED DESCRIPTION

Technical solutions according to embodiments of the present invention will be clearly and completely described below in combination with accompanying drawings of the embodiments of the present invention. Obviously, the embodiments described herein are only part of, rather than all of embodiments of the present invention. Based on the embodiments of the present invention, other embodiments obtained by those skilled in the art shall fall within scope of the present invention.

It should be noted that, all directional indications (such as up, down, left, right, front, and back, etc.) in the embodiments of the present invention only explain a relative position relationship, a motion situation, etc. between components in a certain specific posture (as shown in the drawings). When the specific posture changes, the directional indication also changes accordingly.

In addition, terms such as "first" and "second" involved in the embodiments of the present invention are only for descriptive purposes, rather than indicating or implying relative importance or significance, or implicitly indicate the number of indicated technical features. Therefore, the feature associated with "first" and "second" may include one or more this feature distinctly or implicitly. In the description of the present invention, "plurality of" means at least two, such as two, three, etc, unless otherwise specifically indicated.

In the description of the embodiments of the present invention, unless otherwise clearly specified and limited, technical terms such as "connect to", "fix", and the like should be understood in a broad sense. For example, "fix" may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the present invention can be understood according to specific circumstances.

In addition, the technical solutions between the various embodiments of the present invention may be combined with each other, but must be based on those of ordinary skill in the art. Further, when the combination of the technical solutions is contradictory or cannot be implemented, it should be regarded that the combination of the technical solutions does not exist, nor is within the scope of the present invention.

The reason why an existing cleaning apparatus has cleaning blind areas is that when a rolling brush is mounted on the existing cleaning apparatus, a drive motor is generally provided at an end of the rolling brush. In addition, in order to ensure rotation stability of the rolling brush, most cleaning apparatuses may also be provided with a rotary support structure at another end of the rolling brush. Therefore, a space at two ends of the rolling brush is occupied by the drive motor and the rotary support structure, creating a distance between the two ends of the rolling brush and two ends of the cleaning apparatus. This distance may result in the two ends of the rolling brush not extending beyond both ends of the cleaning apparatus at all, or even not being flush with the two ends of the cleaning apparatus. Therefore, when the cleaning apparatus is used for cleaning the ground, the blind areas at a distance between the two ends of the cleaning apparatus and the two ends of the rolling brush are unable to be cleaned, and the blind area has a size depending on a distance between an end portion of the rolling brush and an end portion of the cleaning apparatus. In order to solve this problem, the present invention provides the following technical solutions.

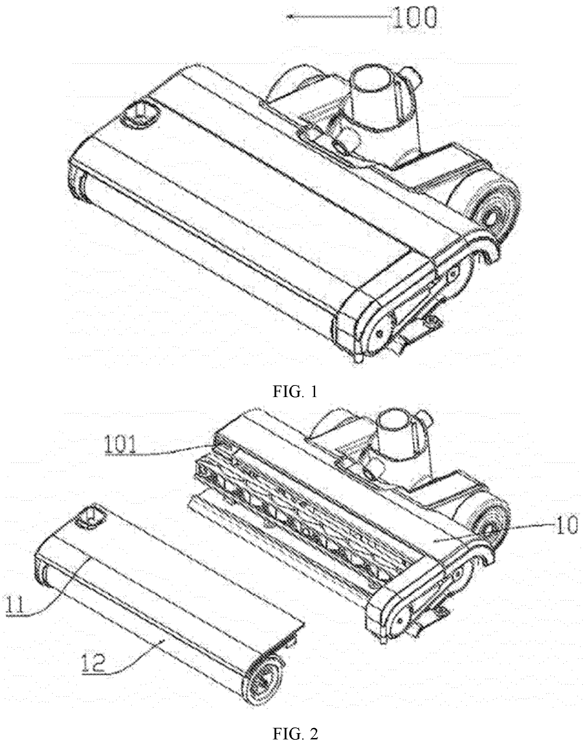

The floor brush 100 according to some embodiments of the present invention is described below with reference to FIG. 1 to FIG. 7. The floor brush 100 in this embodiment may be applied in various cleaning apparatuses. In some embodiments, the cleaning apparatus may be a cleaning machine, a mopping machine, or a dry and wet dual-purpose vacuum cleaner.

With continued reference to FIGS. 1 to 7, the floor brush 100 in this embodiment includes a body 10, a cover plate 11, and a rolling brush 12. The cover plate 11 defines a rolling brush accommodation cavity. The rolling brush 12 is rotatably disposed in the rolling brush accommodation cavity. The cover plate 11 is connected to the body 10, and one end surface of the cover plate 11 is provided with a collar portion 110. The cover plate 11 is connected to the rolling brush 12 to form an integrated structure. One end surface of the rolling brush 12 is recessed inwards to form a sleeve portion 120, and another end surface of the rolling brush 12 is rotatably connected to another end surface of the cover plate 11. The sleeve portion 120 is sleeved on the collar portion 110, and the rolling brush 12 is rotatable relative to the collar portion 110.

In some embodiments, the collar portion 110 is disposed on the one end surface of the cover plate 11, and the one end surface of the rolling brush 12 is recessed inwards to form the sleeve portion 120 sleeved outside the collar portion 110. In this way, a structure on the cover plate 11 for positioning the rolling brush 12 is retracted in the rolling brush 12, which can save an external space of the rolling brush 12 occupied by the structure on the cover plate 11 for positioning the rolling brush 12. Moreover, a space at the end portion of the rolling brush 12 is further vacated, allowing the end portion of the rolling brush 12 to extend to an exterior of the cleaning apparatus and realizing cleaning of an original blind area.

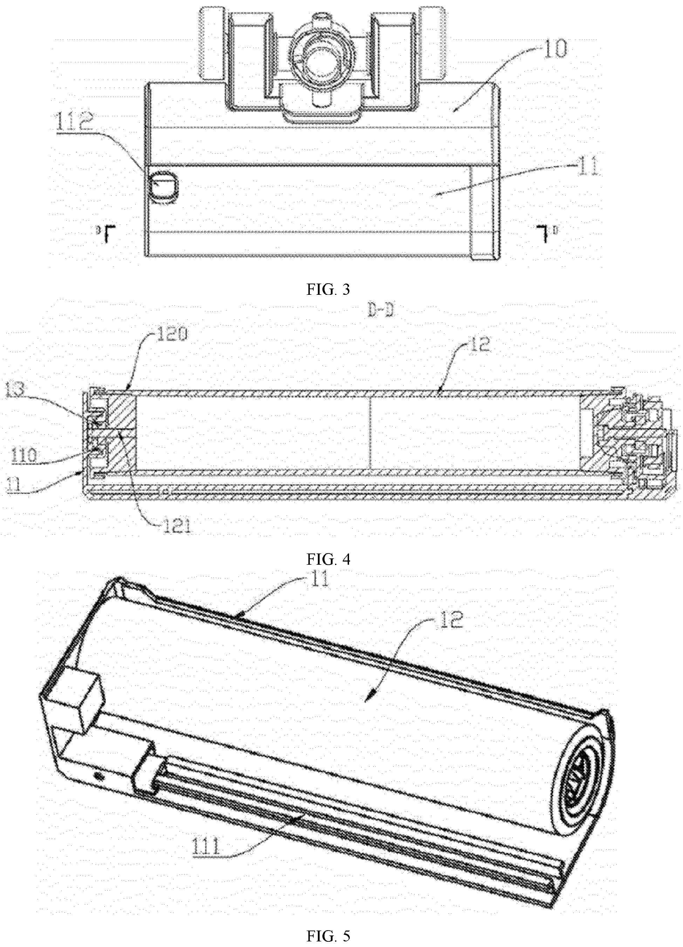

In this embodiment, with continued reference to FIG. 4, the rolling brush 12 is provided with a rolling brush shaft 121 coaxially disposed with the sleeve portion 120, and the rolling brush shaft 121 passes through the sleeve portion 120 to be rotatably connected to the collar portion 110. In some embodiments, the collar portion 110 may function to position the rolling brush shaft 121. When the rolling brush 12 is in a rotation state, the rolling brush shaft 121 is driven to rotate relative to the collar portion 110. Therefore, it may be realized that the rolling brush 12 rotates relative to the collar portion 110.

Further, with continued reference to FIG. 4, the floor brush 100 further includes a limiting support member 13, and the rolling brush shaft 121 is connected to the collar portion 110 through the limiting support member 13. In some embodiments, the limiting support member 13 is selected from a bearing or a shaft sleeve assembly. When the limiting support member 13 is selected from the bearing, the bearing has an inner ring sleeved on the rolling brush shaft 121 and an outer ring connected to the collar portion 110. When the limiting support member 13 is selected from the shaft sleeve assembly, the shaft sleeve assembly is connected to the collar portion 110 and is sleeved on the rolling brush shaft 121.

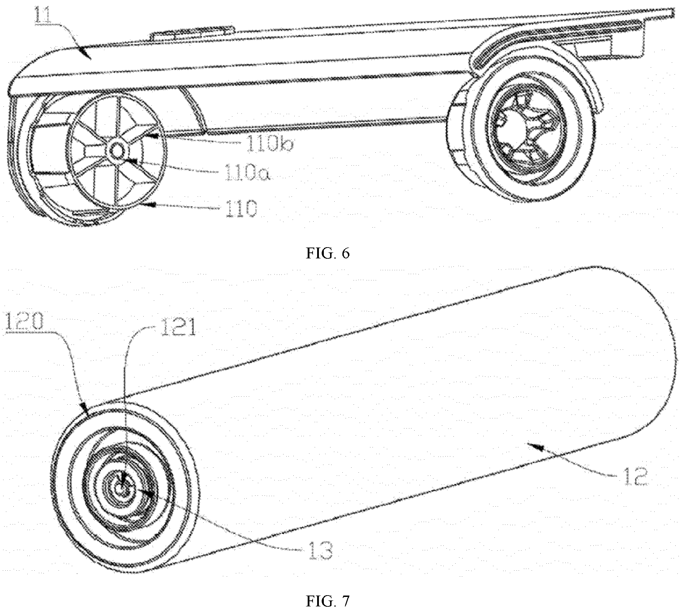

In this embodiment, with continued reference to FIG. 6 and FIG. 7, the collar portion 110 is disposed on an inner side end surface of the cover plate 11. At this time, a metal inserter, as the collar portion 110, may be provided on an inwardly recessed inner side surface of the cover plate 11, which can enhance intensity of the inner side end surface of the cover plate 11 and make it lighter and thinner. Therefore, a blind area clean distance between the end surface of the rolling brush 12 and the wall edges can be greatly reduced, and a cleaning effect of the floor brush along the wall edges is effectively improved.

As illustrated in FIG. 6, the collar portion 110 in this embodiment is of a cylindrical shape and is internally provided with a rotary shaft mounting base 110a. An end portion of the rolling brush shaft 121 is connected to the rotary shaft mounting base 110a. In some embodiments, the rotary shaft mounting base 110a has a mounting hole formed thereon. Moreover, a plurality of reinforcing ribs 110b is provided between the rotary shaft mounting base 110a and an inner cylinder wall of the collar portion 110. In this way, support strength of the rotary shaft mounting base for the rolling brush shaft 121 can be increased.

The integrated structure is detachably connected to the body 10. Herein, the cover plate 11 is slidably connected to the body 10. The body 10 is provided with a sliding rail. The cover plate 11 is provided with a sliding member 111, and the sliding member 111 is slidably inserted to the sliding rail. It should be noted that the sliding rail and the sliding member 111 both extend in an axial direction of the rolling brush 12. In this way, when the integrated structure formed by the cover plate 11 and the rolling brush 12 is removed, the sliding member 111 slides out of the body 10 along the sliding rail in the axial direction of the rolling brush 12. The integrated structure formed by the cover plate 11 and the rolling brush 12 may also be directly flipped horizontally to be removed.

In other embodiments of the present invention, the integrated structure may also be connected to the body 10 through other detachable manners. Through a detachable connection between the integrated structure and the body 10, it can realize easy assembly and disassembly of the integral structure, and decrease disassembly steps.

Further, with continued reference to FIGS. 2 and 3, the floor brush 100 further includes a locking mechanism, and the locking mechanism is configured to lock or unlock sliding between the sliding rail and the sliding member 111. In this embodiment, the locking mechanism has a locking groove 101 formed on the body 10 and a locking portion 112 disposed on the cover plate 11. Moreover, the locking portion 112 is engageable into or disengageable from the locking groove 101. In some embodiments, the locking portion 112 may be an unlocking button disposed on the cover plate 11. When the rolling brush 12 needs to be disassembled, a side of the unlocking button is held by user's hand to press the unlocking button for unlocking it, and the integrated structure formed by the rolling brush 12 and the cover plate 11 is pulled out horizontally from the sliding rail on the body.

In another embodiment of the present invention, the locking portion 112 may also be disposed on the body 10, and the locking groove 101 is formed on the cover plate 11. The details of this embodiment are omitted here.

In addition, the locking mechanism may further include a snapping groove disposed on the body 10 and a snap disposed on the cover plate 11. In some embodiments, the body 10 and the cover plate 11 are locked or unlocked through an engagement between the snap and the snapping groove. The snap may also be disposed on the body 10, and the snapping groove is formed at a corresponding position of the cover plate 11. In this way, locking or unlocking can be realized through the engagement between the snap and the snapping groove.

In this embodiment, the cover plate 11 is detachably connected to the rolling brush 12. In some embodiments, the cover plate 11 may be connected to the rolling brush 12 through the snap. After the integrated structure formed by the cover plate 11 and the rolling brush 12 is detached, the rolling brush 12 may be detached from the cover plate 11 separately, making it more convenient to clean the dirt on the rolling brush 12.

## Claims

1. A floor brush (100), comprising:
a body (10);
a cover plate (11) connected to the body (10), an end surface of the cover plate (11) being provided with a collar portion (110); and
a rolling brush (12) connected to the cover plate (11) to form an integrated structure, the rolling brush (12) having an end surface recessed inwards to form a sleeve portion (120) and another end surface rotatably connected to another end surface of the cover plate (11), the sleeve portion (120) being sleeved on the collar portion (110), and the rolling brush (12) being rotatable relative to the collar portion (110),
wherein:
the integrated structure is detachably connected to the body (10); and
the cover plate (11) is detachably connected to the rolling brush (12)
**characterized in that**
the body (10) has a sliding rail provided thereon; and
the cover plate (11) has a sliding member (111) provided thereon, the sliding member (111) being slidably inserted to the sliding rail,
wherein the sliding rail and the sliding member (111) both extend in an axial direction of the rolling brush (12).

2. The floor brush (100) according to claim 1, wherein the rolling brush (12) is provided with a rolling brush shaft (121) coaxially disposed with the sleeve portion (120), the rolling brush shaft (121) passing through the sleeve portion (120) to be rotatably connected to the collar portion (110).

3. The floor brush (100) according to claim 2, further comprising:
a limiting support member (13), the rolling brush shaft (121) being connected to the collar portion (110) through the limiting support member (13).

4. The floor brush (100) according to claim 3, wherein:
the limiting support member (13) is a bearing, the bearing has an inner ring sleeved on the rolling brush shaft (121) and an outer ring connected to the collar portion (110); or
the limiting support member (13) is a shaft sleeve assembly, the shaft sleeve assembly being connected to the collar portion (110) and sleeved on the rolling brush shaft (121).

5. The floor brush (100) according to claim 1, further comprising a locking mechanism configured to lock or unlock a sliding between the sliding rail and the sliding member (111).

6. The floor brush (100) according to claim 5, wherein the locking mechanism has a locking groove (101)/locking portion (112) formed on the body (10) and a locking portion (112)/locking groove (101) formed on the cover plate (11), the locking portion (112) being engageable into or disengageable from the locking groove (101).

7. The floor brush (100) according to claim 5, wherein the locking mechanism has a snapping groove/snap formed on the body (10) and a snap/ snapping groove formed on the cover plate (11).

8. A cleaning apparatus, comprising a floor brush (100) according to any one of claims 1 to 7.

## Patentansprüche

1. Bodenbürste (100), umfassend:
einen Körper (10);
eine Abdeckplatte (11), die mit dem Körper (10) verbunden ist, wobei eine Endfläche der Abdeckplatte (11) mit einem Kragenbereich (110) versehen ist; und
eine Rollbürste (12), die mit der Abdeckplatte (11) verbunden ist, um eine integrierte Struktur auszubilden, wobei die Rollbürste (12) eine Endfläche, die nach innen vertieft ist, um einen Hülsenbereich (120) auszubilden, und eine andere Endfläche aufweist, die drehbar mit einer anderen Endfläche der Abdeckplatte (11) verbunden ist, wobei der Hülsenbereich (120) auf den Kragenbereich (110) aufgeschoben ist und die Rollbürste (12) relativ zu dem Kragenbereich (110) drehbar ist,
wobei
die integrierte Struktur abnehmbar mit dem Körper (10) verbunden ist; und
die Abdeckplatte (11) lösbar mit der Rollbürste (12) verbunden ist,
**dadurch gekennzeichnet, dass**
der Körper (10) eine darauf vorgesehene Gleitschiene aufweist; und
die Abdeckplatte (11) ein darauf vorgesehenes Gleitelement (111) aufweist,
wobei das Gleitelement (111) gleitend in die Gleitschiene eingesetzt ist,
wobei die Gleitschiene und das Gleitelement (111) sich beide in einer axialen Richtung der Rollbürste (12) erstrecken.

2. Bodenbürste (100) gemäß Anspruch 1, wobei die Rollbürste (12) mit einer Rollbürstenwelle (121) versehen ist, die koaxial zu dem Hülsenbereich (120) angeordnet ist, wobei die Rollbürstenwelle (121) durch den Hülsenbereich (120) hindurchgeht, um drehbar mit dem Kragenbereich (110) verbunden zu sein.

3. Bodenbürste (100) gemäß Anspruch 2, ferner umfassend:
ein Begrenzungsstützelement (13), wobei die Rollbürstenwelle (121) durch das Begrenzungsstützelement (13) mit dem Kragenbereich (110) verbunden ist.

4. Bodenbürste (100) gemäß Anspruch 3, wobei:
das Begrenzungsstützelement (13) ein Lager ist, wobei das Lager einen auf der Rollbürstenwelle (121) aufgeschobenen Innenring und einen mit dem Kragenbereich (110) verbundenen Außenring aufweist; oder
das Begrenzungsstützelement (13) eine Wellenhülsenanordnung ist, wobei die Wellenhülsenanordnung mit dem Kragenbereich (110) verbunden ist und auf die Rollbürstenwelle (121) aufgeschoben ist.

5. Bodenbürste (100) gemäß Anspruch 1, ferner umfassend einen Verriegelungsmechanismus, der so konfiguriert ist, dass er ein Gleiten zwischen der Gleitschiene und dem Gleitelement (111) verriegelt oder entriegelt.

6. Bodenbürste (100) gemäß Anspruch 5, wobei der Verriegelungsmechanismus eine Verriegelungsnut (101)/einen Verriegelungsbereich (112), die/der an dem Körper (10) ausgebildet ist, und einen Verriegelungsbereich (112)/eine Verriegelungsnut (101), der/die an der Abdeckplatte (11) ausgebildet ist, aufweist, wobei der Verriegelungsbereich (112) in die Verriegelungsnut (101) eingreifen oder aus dieser gelöst werden kann.

7. Bodenbürste (100) gemäß Anspruch 5, wobei der Verriegelungsmechanismus eine am Körper (10) ausgebildete Schnapprille/einen Schnapper und eine an der Abdeckplatte (11) ausgebildete Schnapprille/einen Schnapper aufweist.

8. Reinigungsgerät, umfassend eine Bodenbürste (100) gemäß einem der Ansprüche 1 bis 7.

## Revendications

1. Brosse à plancher (100), comprenant :
un corps (10) ;
une plaque de recouvrement (11) reliée au corps (10), une surface d'extrémité de la plaque de recouvrement (11) étant pourvue d'une partie de collet (110) ; et
une brosse roulante (12) reliée à la plaque de recouvrement (11) pour former une structure intégrée, la brosse roulante (12) ayant une surface d'extrémité évidée vers l'intérieur pour former une partie de manchon (120) et une autre surface d'extrémité reliée de manière rotative à une autre surface d'extrémité de la plaque de recouvrement (11), la partie de manchon (120) étant manchonnée sur la partie de collet (110), et la brosse roulante (12) étant rotative par rapport à la partie de collet (110),
dans lequel :
la structure intégrée est reliée de manière amovible au corps (10) ; et
la plaque de recouvrement (11) est reliée de manière amovible à la brosse roulante (12) **caractérisé en ce que**
le corps (10) est pourvu d'un rail coulissant ; et
la plaque de recouvrement (11) comporte un élément coulissant (111) prévu sur celle-ci, l'élément coulissant (111) étant inséré de manière coulissante dans le rail coulissant,
dans lequel le rail coulissant et l'élément coulissant (111) s'étendent tous deux dans une direction axiale de la brosse roulante (12).

2. Brosse à plancher (100) selon la revendication 1, dans laquelle la brosse roulante (12) est pourvue d'un arbre de brosse roulante (121) disposé coaxialement avec la partie de manchon (120), l'arbre de brosse roulante (121) traversant la partie de manchon (120) pour être relié de manière rotative à la partie de collet (110).

3. Brosse à plancher (100) selon la revendication 2, comprenant en outre :
un élément de support de limitation (13), l'arbre de brosse roulante (121) étant relié à la partie de collet (110) par l'intermédiaire de l'élément de support de limitation (13).

4. Brosse à plancher (100) selon la revendication 3, dans laquelle :
l'élément de support de limitation (13) est un roulement, le roulement a une bague intérieure manchonnée sur l'arbre de brosse roulante (121) et une bague extérieure reliée à la partie de collet (110) ; ou
l'élément de support de limitation (13) est un ensemble de manchon d'arbre, l'ensemble de manchon d'arbre étant relié à la partie de collier (110) et manchonné sur l'arbre de brosse roulante (121).

5. Brosse à plancher (100) selon la revendication 1, comprenant en outre un mécanisme de verrouillage configuré pour verrouiller ou déverrouiller un glissement entre le rail coulissant et l'élément coulissant (111).

6. Brosse à plancher (100) selon la revendication 5, dans laquelle le mécanisme de verrouillage comporte une rainure de verrouillage (101) / partie de verrouillage (112) formée sur le corps (10) et une partie de verrouillage (112) / rainure de verrouillage (101) formée sur la plaque de recouvrement (11), la partie de verrouillage (112) pouvant être engagée dans la rainure de verrouillage (101) ou en être désengagée.

7. Brosse à plancher (100) selon la revendication 5, dans laquelle le mécanisme de verrouillage comporte un(e) rainure d'encliquetage / encliquetage formée sur le corps (10) et un(e) encliquetage / rainure d'encliquetage/ formée sur la plaque de recouvrement (11).

8. Appareil de nettoyage comprenant une brosse à plancher (100) selon l'une des revendications 1 à 7.
